# FASCICULE DE BREVET EUROPEEN

(11) **EP 2 077 183 B1**
(45) Date de publication et mention de la délivrance du brevet: **09.03.2011**
(21) Numéro de dépôt: 09150004.1
(22) Date de dépôt: 02.01.2009
(51) Int. Cl.: B29C 70/54, F16L 47/14

(54) **Bride en composite avec partie d'usinage**
Verbundflansch mit Verarbeitungsteil
Composite flange with machined part

(30) Priorité: 04.01.2008 FR 0850037
(43) Date de publication de la demande: 08.07.2009
(73) Titulaire: SNECMA, 75015 Paris (FR)
(72) Inventeur: Marlin, Francois, 77760 Villiers sous Grez (FR); Verseux, Philippe, 91210 Draveil (FR)
(74) Mandataire: Cardy, Sophie Marie

(56) Documents cités:
- US-A- 3 651 661
- US-A- 4 980 006

## Description

La présente invention concerne une bride réalisée en matériau composite comprenant une matrice polymère renforcée par une structure fibreuse.

Dans les structures mécaniques, des pièces sont souvent reliées entre elles à l'aide de brides. D'une manière générale, une bride est définie comme une pièce mécanique qui sert à joindre entre elles deux pièces, ou à renforcer une pièce. Dans les structures où un gain de poids est recherché, par exemple une turbomachine, les brides sont réalisées en matériaux composites à matrice polymère renforcée par des fibres telles que les fibres de carbone, de verre, de Kevlar^{®}. En effet de tels matériaux composites ont une densité sensiblement inférieure aux alliages légers couramment utilisés, pour des performances mécaniques (rigidité, résistance à la rupture) supérieures.

Une bride peut par exemple avoir une forme annulaire. Une telle bride annulaire peut par exemple être du type servant à joindre un carter de rétention avec une manche d'entrée d'air ou une virole de carter intermédiaire. Elle peut posséder à une de ses extrémités axiales (c'est-à-dire selon son axe de symétrie) une région coudée joignant la partie centrale tubulaire de cette bride à l'extrémité de cette bride, qui s'étend sensiblement radialement. Cette extrémité comporte des trous qui sont destinés à recevoir les boulons permettant de solidariser la bride annulaire avec la structure avec laquelle cette extrémité est en contact.

Les composites les plus récents sont réalisés en élaborant une préforme de fibres en 3D, c'est-à-dire un tissage ou un tressage de fibres en trois dimensions. Une telle préforme est ensuite densifiée avec un polymère pour réaliser la pièce composite finie, dans laquelle les fils de la préforme sont noyés au sein d'une matrice polymère solide.

Une technique connue pour réaliser une telle densification est par exemple l'imprégnation par voie liquide : on distingue l'infusion et l'injection.

Dans la technique d'infusion, la préforme est placée entre une moitié de moule et une bâche, un précurseur chimique du polymère sous forme liquide étant ensuite infiltré par un côté au sein de la préforme tandis que le vide est effectué entre la moitié de moule et la bâche. Sous l'action du vide, le précurseur diffuse dans toute la préforme, puis est polymérisé par traitement thermique pour le solidifier. Dans la technique d'injection, la Le document US 4,980,006 décrit une bride réalisée en matériau composite comprenant une matrice polymère renforcée par une structure fibreuse et subissant un usinage final. préforme est placée dans un moule, puis le précurseur liquide est injecté dans le moule en plusieurs points jusqu'à remplir tout le moule (procédé RTM), et est ensuite polymérisé par traitement thermique.

Une autre technique connue pour réaliser la densification de la préforme est l'infiltration chimique en phase vapeur. La préforme est alors placée dans une enceinte à l'intérieur de laquelle est admise une phase gazeuse contenant un précurseur du polymère. Dans des conditions de température et de pression établies dans l'enceinte, la phase gazeuse diffuse au sein de la préforme, et se transforme en polymère au contact des fibres de la préforme.

Afin d'assurer un comportement mécanique adéquat de la bride, il est nécessaire que ses surfaces extérieures épousent parfaitement les surfaces des pièces avec lesquelles cette bride est en contact et assemblée.

Or les spécifications géométriques des assemblages par bride (ou des renforts par bride) sont très variées. La solution consistant à fabriquer un moule différent pour chaque géométrie d'assemblage n'est pas économique viable. De plus, dans le cas d'une pièce possédant une région coudée, et en particulier dans le cas d'une bride annulaire dont la région coudée est circonférentielle, la préforme ne peut jamais être suffisamment déformée pour épouser parfaitement les contours du moule aux coins de la région coudée, car le rayon de courbure de ces coins est trop faible. Il en résulte que, après densification, les coins de la bride sont des zones riches en polymère, donc mécaniquement plus fragiles.

Il est donc nécessaire, pour accommoder toutes les spécifications géométriques existantes des brides, d'usiner les régions de ces brides qui sont en contact avec les surfaces des pièces adjacentes.

Or aucun usinage de la bride n'est admissible, car cet usinage couperait des fibres de la préforme, ce qui compromettrait l'intégrité mécanique de la bride, les fibres assurant la tenue mécanique de celle-ci.

L'invention vise à proposer une bride qui puisse s'adapter à toutes les géométries d'assemblage ou de renfort, tout en conservant son intégrité mécanique.

Ce but est atteint grâce au fait que la bride comprend une partie structurale renforcée par une structure fibreuse principale, et une première partie d'usinage renforcée par une première structure fibreuse distincte de la structure fibreuse principale, les matrices de la partie structurale et de la première partie d'usinage étant identiques, la première partie d'usinage étant située sur une partie au moins de la face principale de la partie structurale et usinée selon une première surface d'usinage, l'intersection entre la première surface d'usinage et les fibres de la structure fibreuse principale étant nulle.

Grâce à ces dispositions, il est possible d'usiner la bride, à savoir sa partie d'usinage, de telle sorte que ses surfaces extérieures épousent parfaitement les surfaces des pièces avec lesquelles cette bride est destinée à être en contact, et ceci sans que la partie structurale de cette bride (et en particulier la structure fibreuse renforçant cette partie structurale) soit entamée par cet usinage. Ainsi, la bride conserve ses performances mécaniques et son positionnement vis-à-vis de la structure sur laquelle elle est fixée.

Avantageusement, la bride comprend en outre une seconde partie d'usinage renforcée par une seconde structure fibreuse distincte de la structure fibreuse principale, et usinée selon une seconde surface d'usinage, l'intersection entre la seconde surface d'usinage et les fibres de la structure fibreuse principale étant nulle, les matrices de la partie structurale et de la seconde partie d'usinage étant identiques, la seconde partie d'usinage étant située sur une partie au moins de la face opposée à la face principale.

Ainsi, la bride peut être usinée sur deux de ses faces opposées sans que sa partie structurale soit entamée par cet usinage. Lorsque la bride est destinée à être serrée entre deux pièces, la présence d'une préforme d'usinage sur chacune des faces de la bride destinée à être en contact avec une de ces deux pièces permet de donner aux surfaces extérieures de la bride une forme épousant parfaitement les parties de ces deux pièces avec lesquelles elles sont en contact. Ainsi la bride peut être maintenue serrée et parfaitement en place entre ces deux pièces.

L'invention concerne également un procédé de fabrication d'une bride.

Selon l'invention ce procédé comprend la conformation d'une première préforme sur un mandrin, la conformation d'une deuxième préforme sur la première préforme, l'une des deux préformes étant structurale, la densification des première et deuxième préformes avec une même matrice polymère pour former respectivement une première partie et une deuxième partie de la bride, et l'usinage de la partie dont la préforme n'est pas structurale.

Avantageusement, le procédé comprend la conformation d'une troisième préforme sur la deuxième préforme avant la densification des première et deuxième préformes, la densification de la troisième préforme simultanément avec la densification des première et deuxième préformes avec une même matrice polymère pour former une troisième partie, et l'usinage de la première partie et de la troisième partie.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective et en coupe d'une bride annulaire selon l'invention,
- la figure 2 est une vue en perspective et en coupe d'une bride annulaire selon l'invention assemblée sur un carter,
- la figure 3 est une vue en perspective et en coupe de préformes d'usinage telles que positionnées sur un moule annulaire coudé, destinées à former une bride annulaire selon l'invention,
- la figure 4 est une vue en perspective d'une partie de préformes d'usinage telles que positionnées dans un moule annulaire coudé avec utilisation d'une contre-forme, destinées à former une bride annulaire selon l'invention.

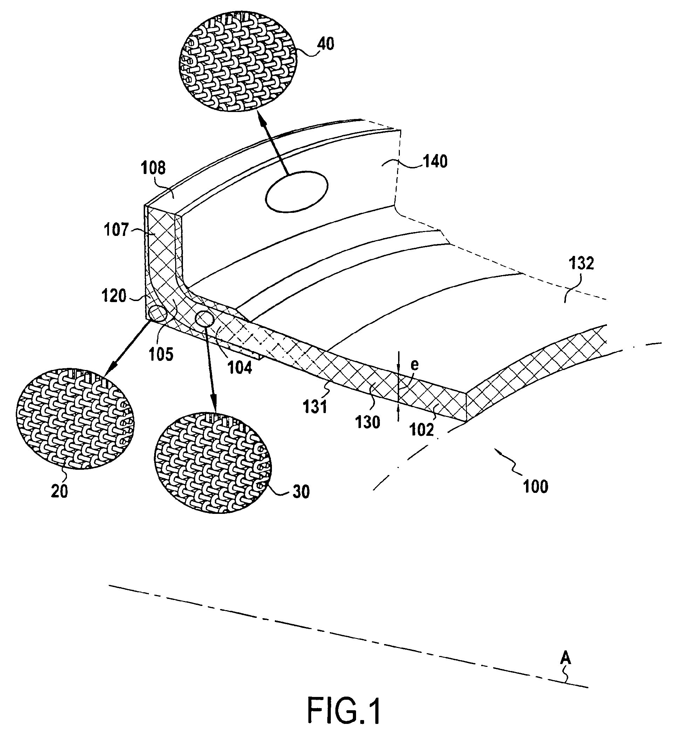

La figure 1 montre une bride annulaire 100 d'axe principal A, possédant une région coudée 105 annulaire qui est donc centrée sur cet axe. La région coudée 105 est située à proximité d'une extrémité de la bride 100 et divise la bride 100 en une région cylindrique 102 et une région radiale 107 annulaire qui prolonge la région coudée 105 radialement vers l'extérieur. La région radiale 107 se termine par une surface d'extrémité 108 qui est cylindrique et qui s'étend axialement (selon l'axe principal A) sur une distance sensiblement égale à l'épaisseur e de la région cylindrique 102, cette épaisseur e étant définie comme l'étendue radiale de cette région cylindrique 102. Alternativement, cette distance peut être différente de l'épaisseur e.

Dans le cas représenté, la région coudée 105 forme un angle de sensiblement 90°, de telle sorte que la région radiale 107 s'étend perpendiculairement à la région cylindrique 102, radialement vers l'extérieur. Alternativement, la région radiale 107 peut s'étendre radialement vers l'intérieur (c'est-à-dire en direction de l'axe A). Plus généralement, la région coudée peut former un angle compris entre 45° et 180°, par exemple un angle compris entre 90° et 180°.

La bride 100 est constituée d'une partie structurale 130, et d'au moins une partie d'usinage. La partie structurale 130 est destinée à reprendre les sollicitations auxquelles la bride 100 est soumise. Sur la figure 1, la partie d'usinage comprend une première partie d'usinage 120 qui est située sur une partie de la face principale 131 de la partie structurale 130, et une seconde partie d'usinage 140 qui est située sur une partie de la face opposée 132 qui est opposée à la face principale 131. La face principale 131 et la face opposée 132 sont respectivement la face radialement extérieure et la face radialement intérieure de la partie structurale 130. Ainsi, la première partie d'usinage 120 est située sur la face convexe de la région coudée 105. La seconde partie d'usinage 140 est située sur la face concave de la région coudée 105. La première partie d'usinage 120 s'étend depuis la sous-région 104 de la région cylindrique 102 qui est immédiatement adjacente à la région coudée 105, le long de la région coudée 105 et de la région radiale 107, jusqu'à la surface d'extrémité 108.

La bride 100 est un matériau composite, c'est-à-dire une matrice renforcée par une structure fibreuse. Ainsi, la partie structurale 130 comprend une matrice polymère renforcée par une structure fibreuse principale 30. De façon similaire, la première partie d'usinage 120 comprend une matrice polymère renforcée par une première structure fibreuse 20, et la seconde partie d'usinage 140 comprend une matrice polymère renforcée par une seconde structure fibreuse 40. Ces structures fibreuses sont distinctes les unes des autres, c'est-à-dire qu'elles n'ont aucune fibre en commun. Les matrices polymère de la partie structurale 130, de la première partie d'usinage 120 et de la seconde partie d'usinage 140 forment une matrice continue, c'est-à-dire d'un seul tenant. Cette continuité résulte du procédé de fabrication de la bride 100, détaillé ci-après, et confère à cette bride 100 une meilleure intégrité mécanique que si les matrices des parties structurale et d'usinages étaient réalisée en un polymère différent.

Par exemple, la première structure fibreuse 20, la structure fibreuse principale 30, et la seconde structure fibreuse 40 sont chacune constituées d'une préforme de fibres tissées ou tressées, cette préforme étant ainsi une préforme 3D (c'est-à-dire en trois dimensions).

Le rôle des parties d'usinage 120, 140 est essentiellement géométrique. Ces parties confèrent à la bride 100 une forme qui se rapproche le plus possible de la forme des pièces adjacentes sur lesquelles cette bride est destinée à être fixée, et elles peuvent être usinées afin que leurs surfaces extérieures épousent la forme de ces pièces adjacentes. Ainsi, la bride 100 est parfaitement en appui sur ces pièces adjacentes et peut y être fixé de façon stable. De plus, l'intégrité mécanique de la bride 100, c'est-à-dire ses performances mécaniques en utilisation, sont conservées. En effet, la structure fibreuse principale 30, qui confère à la bride 100 ses performances mécaniques, n'est pas endommagée par l'usinage de la bride 100, puisque cet usinage ne coupe que les fibres de la première structure fibreuse 20 et de la seconde structure fibreuse 40 (l'intersection entre les surfaces d'usinage, c'est-à-dire les surfaces suivies par l'outil d'usinage, et les fibres de la structure fibreuse principale 30 est nulle).

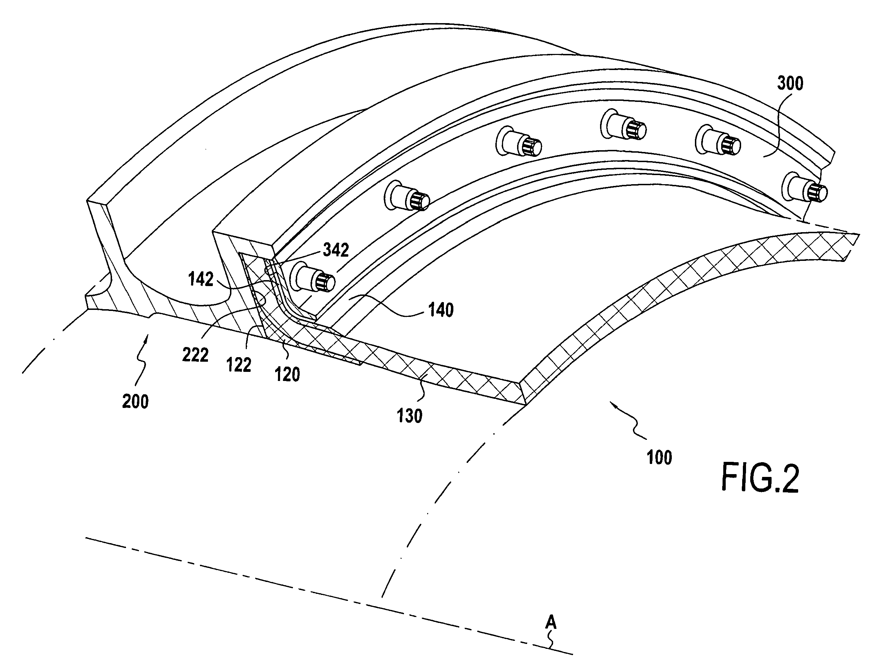

Par exemple, comme représenté sur la figure 2, la première partie d'usinage 120 de la bride 100 de la figure 1 est usinée de telle sorte que la face d'appui 122 de cette première partie d'usinage 120 qui est destinée à venir en contact avec la surface 222 de la pièce adjacente 200 épouse parfaitement cette surface 222. Par exemple, cette face d'appui 122 est la face de la première partie d'usinage 120 qui est sensiblement perpendiculaire à l'axe principal A.

La seconde partie d'usinage 140 de la bride 100 de la figure 1 est usinée de telle sorte que la surface concave d'appui 142 de cette seconde partie d'usinage 140 qui est destinée à venir en contact avec la surface convexe 342 de la contreplaque 300 épouse parfaitement cette surface convexe 342.

L'utilisation d'une préforme d'usinage sur deux faces opposées de la bride 100 permet d'obtenir un bon parallélisme de ces faces.

Ainsi, la bride 100 est maintenue parfaitement en appui et serrée entre la pièce adjacente 200 et la contreplaque 300. La solidarisation de cet ensemble peut par exemple être réalisé grâce à des boulons traversant la bride 100, dont les écrous prennent appui sur la contreplaque (ou alternativement sur des rondelles placées sur la seconde partie d'usinage 140). L'usinage de la bride qui a été effectué pour réaliser les trous par lesquels passent ces boulons est à distinguer de l'usinage des parties d'usinage. En effet, l'usinage de ces trous n'a pas pour objectif de permettre une adéquation entre les surfaces extérieures de la bride et celles des pièces avec lesquelles elles sont en contact.

Selon la géométrie de la pièce adjacente, la bride 100 peut ne comporter qu'une première partie d'usinage 120 (et pas de seconde partie d'usinage 140), ou ne comporter qu'une seconde partie d'usinage 140 (et pas de première partie d'usinage 120).

L'autre extrémité axiale (non-représentée) de la bride 100 peut également comporter une ou plusieurs parties d'usinage destinées à être usinées afin d'épouser la forme d'une autre pièce adjacente. Par exemple, cette autre extrémité de la bride 100 peut avoir une géométrie similaire que celle de l'extrémité axiale représentée sur la figure 2, c'est-à-dire être coudée.

La description ci-dessus concerne le cas où la bride 100 est une bride de forme annulaire, par exemple une bride d'assemblage, possédant une ou plusieurs régions coudées de telle sorte que les parties d'usinage sont également coudées. Alternativement, la bride peut avoir une géométrie telle que les parties d'usinage sont sensiblement planes.

De telles brides peuvent être utilisées pour effectuer une liaison sur tout type de carter ou de virole. Par exemple une turbomachine peut comporter une telle bride.

La bride peut être également une pièce de renfort destinée à être fixée (par exemple par boulonnage) sur une paroi. Cette pièce de renfort peut être un raidisseur, par exemple un raidisseur en forme de T ou de L. Un tel raidisseur peut en outre former une bride pour la fixation d'équipements.

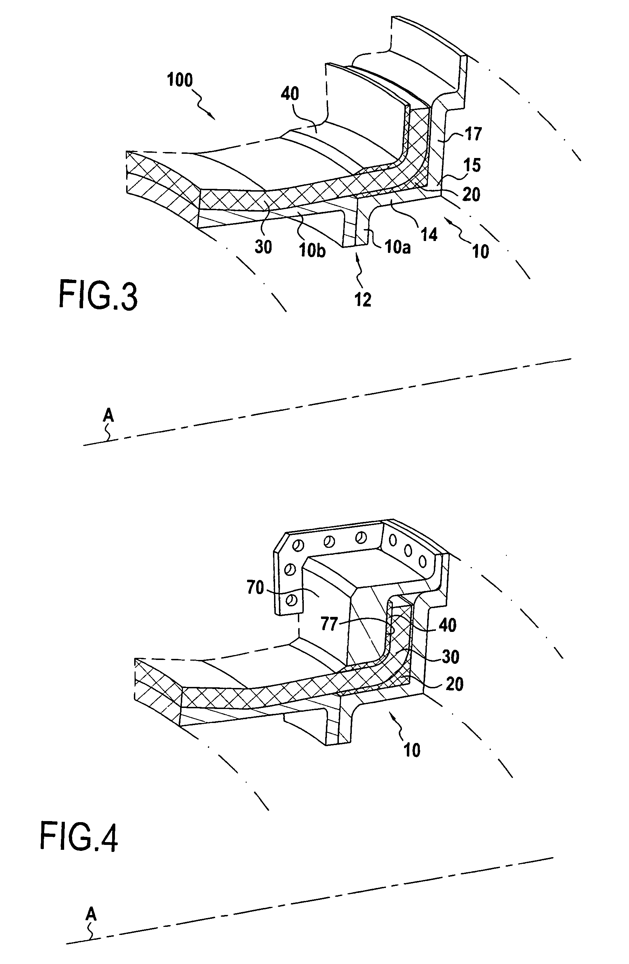

Le procédé de fabrication d'une bride est détaillé ci-après, en référence aux figures 3 et 4. La figure 3 montre un mandrin 10 annulaire d'axe principal A. Ce mandrin 10 possède une partie coudée 15 qui sépare une partie cylindrique 12 du mandrin 10, qui est centrée sur l'axe principal A, et une partie radiale 17 du mandrin 10. Dans le cas représenté, le mandrin 10 se subdivise en une partie primaire 10a incluant la partie radiale 17, la partie coudée 15, et la sous-partie 14 de la partie tubulaire 12 adjacente à la partie coudée 15, et en une partie secondaire 10b incluant les régions de la partie tubulaire 12 plus éloignées de la partie coudée 15. Cette subdivision du mandrin 10 permet de faciliter le moulage ultérieur de la bride 100, le mandrin 10 constituant une paroi du moule.

Une première préforme 20 est conformée autour du mandrin 10, de telle sorte qu'elle recouvre la partie radiale 17, la partie coudée 15, et la sous-partie 14 de la partie tubulaire 12. Une deuxième préforme 30 est ensuite conformée autour de la première préforme 20. La deuxième préforme 30 est la préforme structurale, qui est destinée à supporter la majorité des sollicitations (mécaniques, thermiques) auxquelles la bride est soumise, comme expliqué ci-dessus. Comme représenté sur la figure 3, une troisième préforme 40 est ensuite conformée autour de la seconde préforme 30.

Alternativement, la deuxième préforme 30 peut ne comporter aucune préforme conformée autour d'elle.

Alternativement, la deuxième préforme 30 peut être conformée directement sur le mandrin 10.

La conformation de ces préformes peut s'effectuer par plusieurs procédés. Elle peut ainsi s'effectuer par un des procédés connus suivants : par enroulement autour du mandrin 10 d'une préforme de fibres tissées ou tressées, ou par enfilement selon l'axe A d'un anneau (chaussette) de fibres tissées ou tressées, ou par enroulement filamentaire de fibres autour du mandrin 10, ou par dépose de plis formés chacun de fibres préimprégnées par un polymère. Dans ces deux derniers cas, la préforme est une préforme 2D (en deux dimensions).

De préférence, la première préforme 20, la deuxième préforme 30, et la troisième préforme 40 sont chacune constituées du même type de fibre, ceci afin de minimiser les contraintes aux interfaces entre ces préformes.

Par exemple, ces préformes sont en fibre de carbone, ou en fibre de verre.

La première préforme 20, la deuxième préforme 30, et la troisième préforme 40 sont ensuite densifiées de façon à être noyées dans une même matrice polymère, constituant ainsi une bride 100 qui est un matériau composite.

Divers procédés de densification peuvent être utilisés. Ces procédés sont connus de l'état de la technique, et ne sont donc décrits que succinctement.

Par exemple, la densification des préformes est faite par infusion, c'est-à-dire qu'une bâche (non-représentée) est placée sur la bride 100, fixée sur le mandrin de façon à constituer une enceinte hermétique. Le polymère destiné à former la matrice de la bride est inséré dans l'enceinte, tandis que le vide est réalisé dans cette enceinte de façon à obtenir une imprégnation satisfaisante de toutes les préformes. Le polymère est ensuite durcit de façon connue.

Alternativement, la densification des préformes est faite par injection, selon le procédé connu RTM *(Resin Transfer Moulding).*

Alternativement, la densification des préformes est faite par infusion, et avec l'utilisation d'une contre-forme 70, comme représenté sur la figure 4. Cette contre-forme 70 recouvre intégralement la troisième préforme 40, de telle sorte qu'elle maintient la première préforme 20, la deuxième préforme 30, et la troisième préforme 40 en position entre cette contre-forme et le mandrin 10, afin d'éviter un déplacement des préformes lors de l'infusion du polymère constituant la matrice. Ainsi, dans le cas de préformes annulaires possédant une région coudée comme représenté sur la figure 4, la contre-forme 70 possède une surface coudée annulaire 77 qui recouvre toute la surface de la troisième préforme 40 (ou toute la surface de la deuxième préforme 30 qui est sensiblement opposée à l'interface entre cette deuxième préforme 30 et la première préforme 20).

Le procédé selon l'invention peut utiliser toute méthode de densification des préformes, et ne se limite pas aux méthodes décrites ci-dessus.

## Revendications

1. Bride (100) réalisée en matériau composite comprenant une matrice polymère renforcée par une structure fibreuse, ladite bride étant **caractérisée en ce qu'**elle comprend une partie structurale (130) renforcée par une structure fibreuse principale (30), et une première partie d'usinage (120) renforcée par une première structure fibreuse (20) distincte de la structure fibreuse principale (30), les matrices de ladite partie structurale (130) et de ladite première partie d'usinage (120) étant identiques, ladite première partie d'usinage (120) étant située sur une partie au moins de la face principale de ladite partie structurale (130) et usinée selon une première surface d'usinage, l'intersection entre ladite première surface d'usinage et les fibres de ladite structure fibreuse principale (30) étant nulle.

2. Bride (100) selon la revendication 1 **caractérisée en ce qu'**elle est annulaire.

3. Bride (100) selon la revendication 1 ou 2 **caractérisée en ce que** ladite première structure fibreuse (20) et ladite structure fibreuse principale (30) sont constituées chacune d'une préforme choisie dans le groupe constitué d'une préforme tissée et d'une préforme tressée.

4. Bride (100) selon la revendication 1 à 3 **caractérisée en ce qu'**elle comprend en outre une seconde partie d'usinage (140) renforcée par une seconde structure fibreuse (40) distincte de ladite structure fibreuse principale (30), et usinée selon une seconde surface d'usinage, l'intersection entre ladite seconde surface d'usinage et les fibres de ladite structure fibreuse principale (30) étant nulle, les matrices de ladite partie structurale (130) et de ladite seconde partie d'usinage (140) étant identiques, ladite seconde partie d'usinage (140) étant située sur une partie au moins de la face opposée à ladite face principale.

5. Bride (100) selon la revendication 4 **caractérisée en ce que** ladite première structure fibreuse (20), ladite seconde structure fibreuse (40), et ladite structure fibreuse principale (30) sont chacune constituées d'une préforme choisie dans le groupe constitué d'une préforme tissée et d'une préforme tressée.

6. Bride (100) selon la revendication 1 à 5 **caractérisée en ce qu'**elle comporte une région coudée (105), ladite première partie d'usinage (120) étant située sur la face convexe de ladite région coudée (105).

7. Bride (100) selon la revendication 6 **caractérisée en ce que** ladite région coudée (105) forme un angle compris entre 90° et 180°.

8. Turbomachine comportant une bride (100) selon l'une quelconque des revendications 1 à 7.

9. Procédé de fabrication d'une bride (100), **caractérisé en ce qu'**il comprend la conformation d'une première préforme sur un mandrin, la conformation d'une deuxième préforme sur ladite première préforme, l'une des deux préformes étant structurale, la densification desdites première et deuxième préformes avec une même matrice polymère pour former respectivement une première partie et une deuxième partie de ladite bride, et l'usinage de la partie dont la préforme n'est pas structurale.

10. Procédé selon la revendication 9 **caractérisé en ce que** lesdites première et deuxième préformes sont fabriquées par un procédé choisi dans le groupe constitué du tissage et du tressage.

11. Procédé selon la revendication 9 **caractérisé en ce qu'**il comprend la conformation d'une troisième préforme (40) sur ladite deuxième préforme (30) avant la densification desdites première et deuxième préformes (20, 30), la densification de ladite troisième préforme (40) simultanément avec la densification desdites première et deuxième préformes (20, 30) avec une même matrice polymère pour former une troisième partie (140), et l'usinage de ladite première partie (120) et de ladite troisième partie (140).

12. Procédé selon la revendication 11 **caractérisé en ce que** lesdites première (20), deuxième (30), et troisième (40) préformes, sont fabriquées par un procédé choisi dans le groupe constitué du tissage et du tressage.

13. Procédé selon la revendication 9 à 12 **caractérisée en ce que** ladite bride (100) comporte une région coudée (105).

14. Procédé selon la revendication 13 **caractérisée en ce que** ladite région coudée (105) forme un angle compris entre 90° et 180°.

## Claims

1. A coupling (100) made of composite material comprising a polymer matrix reinforced by a fiber structure, said coupling being **characterized in that** it comprises a structural portion (130) reinforced by a main fiber structure (30), and a first machining portion (120) reinforced by a first fiber structure (20) distinct from the main fiber structure (30), the matrices of said structural portion (130) and of said first machining portion (120) being identical, said first machining portion (120) being situated on at least a fraction of the main face of said structural portion (130) and being machined in a first machining surface, there being no intersection between said first machining surface and the fibers of said main fiber structure (30).

2. A coupling (100) according to claim 1, **characterized in that** it is annular.

3. A coupling (100) according to claim 1 or claim 2, **characterized in that** each of said first fiber structure (20) and said main fiber structure (30) is constituted by a preform selected from the group constituted by a woven preform and a braided preform.

4. A coupling (100) according to any one of claims 1 to 3, **characterized in that** it further comprises a second machining portion (140) reinforced by a second fiber structure (40) distinct from said main fiber structure (30) and machined in a second machining surface, there being no intersection between said second machining surface and the fibers of said main fiber structure (30), the matrices of said structural portion (130) and of said second machining portion (140) being identical, said second machining portion (140) being situated on at least a fraction of the face opposite said main face.

5. A coupling (100) according to claim 4, **characterized in that** each of said first fiber structure (20), said second fiber structure (40), and said main fiber structure (30) is constituted by a preform selected from the group constituted by a woven preform and a braided preform.

6. A coupling (100) according to any one of claims 1 to 5, **characterized in that** it includes an angled region (105), said first machining portion (120) being situated on the convex face of said angled region (105).

7. A coupling (100) according to claim 6, **characterized in that** said angled region (105) forms an angle lying in the range 90° to 180°.

8. A turbomachine including a coupling (100) according to any one of claims 1 to 7.

9. A method of fabricating a coupling (100), the method being **characterized in that** it comprises shaping a first preform on a mandrel, shaping a second preform on said first preform, one of said two preforms being structural, densifying said first and second preforms with a common polymer matrix to form respectively a first portion and a second portion of said coupling, and machining the portion having a preform that is not structural.

10. A method according to claim 9, **characterized in that** said first and second preforms are fabricated by a method selected from the group constituted by weaving and braiding.

11. A method according to claim 9, **characterized in that** it includes shaping a third preform (40) on said second preform (30) prior to densifying said first and second preforms (20, 30), densifying said third preform (40) simultaneously with densifying said first and second preforms (20, 30) with a common polymer matrix to form a third portion (140), and machining said first portion (120) and said third portion (140).

12. A method according to claim 11, **characterized in that** said first, second, and third preforms (20, 30, 40) are fabricated by a method selected from the group constituted by weaving and by braiding.

13. A method according to any one of claims 9 to 12, **characterized in that** said coupling (100) includes an angled region (105).

14. A method according to claim 13, **characterized in that** said angled region (105) forms an angle lying in the range 90° to 180°.

## Patentansprüche

1. Flansch (100), der aus einem Verbundwerkstoff gefertigt ist, der eine durch eine Faserstruktur verstärkte Polymermatrix umfaßt, wobei der Flansch **dadurch gekennzeichnet ist, daß** er ein Strukturteil (130), das durch eine Hauptfaserstruktur (30) verstärkt ist, und einen ersten Bearbeitungsteil (120), der durch eine sich von der Hauptfaserstruktur (30) unterscheidende erste Faserstruktur (20) verstärkt ist, umfaßt, wobei die Matrizes des Strukturteils (130) und des ersten Bearbeitungsteils (120) identisch sind, wobei der erste Bearbeitungsteil (120) sich auf wenigstens einem Teil der Hauptseite des Strukturteils (130) befindet und entlang einer ersten Bearbeitungsfläche bearbeitet ist, wobei der Schnittpunkt zwischen der ersten Bearbeitungsfläche und den Fasern der Hauptfaserstruktur (30) null ist.

2. Flansch (100) nach Anspruch 1, **dadurch gekennzeichnet, daß** er ringförmig ist.

3. Flansch (100) nach Anspruch 1 oder 2, **dadurch gekennzeichnet, daß** die erste Faserstruktur (20) und die Hauptfaserstruktur (30) jeweils von einem Vorformling gebildet sind, der aus der Gruppe bestehend aus einem gewebten Vorformling und einem geflochtenen Vorformling ausgewählt ist.

4. Flansch (100) nach Anspruch 1 bis 3, **dadurch gekennzeichnet, daß** er ferner einen zweiten Bearbeitungsteil (140), der durch eine sich von der Hauptfaserstruktur (30) unterscheidende zweite Faserstruktur (40) verstärkt und entlang einer zweiten Bearbeitungsfläche bearbeitet ist, wobei der Schnittpunkt zwischen der zweiten Bearbeitungsfläche und den Fasern der Hauptfaserstruktur (30) null ist, wobei die Matrizes des Strukturteils (130) und des zweiten Bearbeitungsteils (140) identisch sind, wobei der zweite Bearbeitungsteil (140) sich auf wenigstens einem Teil der der Hauptseite gegenüberliegenden Seite befindet.

5. Flansch (100) nach Anspruch 4, **dadurch gekennzeichnet, daß** die erste Faserstruktur (20), die zweite Faserstruktur (40) und die Hauptfaserstruktur (30) jeweils von einem Vorformling gebildet sind, der aus der Gruppe bestehend aus einem gewebten Vorformling und einem geflochtenen Vorformling ausgewählt ist.

6. Flansch (100) nach Anspruch 1 bis 5, **dadurch gekennzeichnet, daß** er einen abgewinkelten Bereich (105) aufweist, wobei der erste Bearbeitungsteil (120) auf der konvexen Seite des abgewinkelten Bereichs (105) gelegen ist.

7. Flansch (100) nach Anspruch 6, **dadurch gekennzeichnet, daß** der abgewinkelte Bereich (105) einen Winkel zwischen 90° und 180° bildet.

8. Turbomaschine, die einen Flansch (100) nach einem der Ansprüche 1 bis 7 umfaßt.

9. Verfahren zur Herstellung eines Flansches (100), **dadurch gekennzeichnet, daß** es die Gestaltung eines ersten Vorformlings auf einem Tragkörper, die Gestaltung eines zweiten Vorformlings auf dem ersten Vorformling, wobei einer der beiden Vorformlinge ein Strukturvorformling ist, die Verdichtung des ersten und des zweiten Vorformlings mit einer gleichen Polymermatrix, um einen ersten Teil bzw. einen zweiten Teil des Flansches zu bilden, sowie die Bearbeitung des Teils, dessen Vorformling kein Strukturvorformling ist, umfaßt.

10. Verfahren nach Anspruch 9, **dadurch gekennzeichnet, daß** der erste und der zweite Vorformling mittels eines Verfahrens hergestellt werden, das aus der Gruppe bestehend aus dem Weben und dem Flechten ausgewählt ist.

11. Verfahren nach Anspruch 9, **dadurch gekennzeichnet, daß** es die Gestaltung eines dritten Vorformlings (40) auf dem zweiten Vorformling (30) vor Verdichten des ersten und des zweiten Vorformlings (20, 30), die Verdichtung des dritten Vorformlings (40) gleichzeitig mit der Verdichtung des ersten und des zweiten Vorformlings (20, 30) mit einer gleichen Polymermatrix, um einen dritten Teil (140) zu bilden, sowie die Bearbeitung des ersten Teils (120) und des dritten Teils (140) umfaßt.

12. Verfahren nach Anspruch 11, **dadurch gekennzeichnet, daß** der erste (20), der zweite (30) und der dritte (40) Vorformling mittels eines Verfahrens hergestellt werden, das aus der Gruppe bestehend aus dem Weben und dem Flechten ausgewählt ist.

13. Verfahren nach Anspruch 9 bis 12, **dadurch gekennzeichnet, daß** der Flansch (100) einen abgewinkelten Bereich (105) aufweist.

14. Verfahren nach Anspruch 13, **dadurch gekennzeichnet, daß** der abgewinkelte Bereich (105) einen Winkel zwischen 90° und 180° bildet.
